# EUROPEAN PATENT SPECIFICATION

(11) **EP 4 291 933 B1**
(45) Date of publication and mention of the grant of the patent: **26.11.2025**
(21) Application number: 21716649.5
(22) Date of filing: 29.03.2021
(51) Int. Cl.: G02B 7/10, G03B 17/04

(54) **OPTICAL DEVICE FOR ELECTRONIC APPARATUS**
OPTISCHE VORRICHTUNG FÜR EIN ELEKTRONISCHES GERÄT
DISPOSITIF OPTIQUE POUR APPAREIL ÉLECTRONIQUE

(43) Date of publication of application: 20.12.2023
(73) Proprietor: Huawei Technologies Co., Ltd., Shenzhen, Guangdong 518129 (CN)
(72) Inventor: EROMAKI, Marko, 16440 Kista (SE)
(74) Representative: Goddar, Heinz J.
(86) International application number: PCT/EP2021/058107
(87) International publication number: WO 2022/207062

(56) References cited:
- WO-A1-2020/164691
- WO-A1-2021/023221
- CN-A- 112 526 700
- US-A1- 2006 017 836

## Description

### TECHNICAL FIELD

The disclosure relates to an optical device comprising a lens arrangement defining an optical axis, a first cylinder element accommodating the lens arrangement, and a second cylinder element accommodating the first cylinder element.

### BACKGROUND

Telescopic camera optics implemented using with retracting and protruding lens systems, in order to achieve longer focal length cameras having, e.g., zoom or telephoto functions, have existed for many years in the digital still camera industry. These solutions, however, require higher level miniaturization and robustness to be able to be provided in smaller headsets such as smartphones.

One solution which has been implemented, at least in theory, in such small electronic apparatuses is the so-called DSC (digital setting circle) telescope zoom unit. The technical architecture for DSC telescope zoom units is, in general, highly complex and consists of multiple moving lens groups, guiding tracks and rails, VCM or stepper motors, and mutual connecting elements such as threaded and nesting cylinders. Such solutions have large form factors and are therefore not directly compatible for successful handset integration. Furthermore, the cost of is relatively high.

More specifically, the elevation mechanism of the DSC telescope zoom unit has to provide not only an accurate, durable, and long stroke, but also have a compact form factor around the core optical system. There has to be enough free space within the threaded and nesting cylinders to accommodate the lenses and any additional actuators, e.g., for autofocus, optical image stabilization, mechanical shutter, or variable iris. These actuators are usually located on the centermost cylinder unit having the highest elevation, and require suitable power/control signal transmission to be provided through the plurality of rotating and incrementally elevating cylinders.

Hence, there is a need for an improved optical device for handsets such as smartphones.

WO 2020/164691 A1 discloses an optical system for a camera comprising an actuator, an actuation module, an optical module, and a frame. The actuation module comprises a stationary threaded base element and a moveable dual-threaded connector. The optical module comprises at least one lens and a moveable threaded support element housing the lens. The dual-threaded connector comprises a first connector thread and a second connector thread, the first connector thread and the second connector thread being oriented in opposite directions. The threaded base element comprises a thread engaging the first connector thread, and the threaded support element comprises a thread engaging the second connector thread. The actuator is configured to rotate the dual-threaded connector around the center axis in a first tangential direction and in an opposite, second tangential direction. The frame interlocks with the threaded support element such that rotation of the threaded support element is prevented, allowing the optical module to be moved between a first end position and a second end position in response to rotation of the dual-threaded connector in the tangential directions. This system achieves the required focal length without use of visible support while still remaining rigid.

### SUMMARY

It is an object to provide an improved optical device. The foregoing and other objects are achieved by the features of the independent claims. Further implementation forms are apparent from the dependent claims, the description, and the figures.

According to a first aspect, there is provided an optical device for an electronic apparatus, the optical device comprising a lens arrangement defining an optical axis, a first cylinder element configured to accommodate the lens arrangement and to move along the optical axis, and a second cylinder element configured to accommodate the first cylinder element. The optical device furthermore comprises a rotation element, a drive arrangement configured to rotate the rotation element around the optical axis, and an extendable actuating element. A first end of the actuating element is fixed to the first cylinder element and a second end of the actuating element being fixed to the rotation element. The actuating element is configured to generate movement of the first cylinder element along the optical axis, with respect to the second cylinder element, as the rotation element is rotated around the optical axis.

Such a solution is small, robust, and comprises few components, yet still provides accurate and long strike optics. Furthermore, it is scalable for any required optical device elevation, and easily manufactured.

In a possible implementation form of the first aspect, the optical device further comprises a stationary base element configured to accommodate the rotation element and the second cylinder element, providing a fixed element suitable for accommodating any electrical or other connections.

In a further possible implementation form of the first aspect, the second cylinder element is part of the base element, reducing the number of components.

In a further possible implementation form of the first aspect, the optical device comprises at least one third cylinder element interposed between the first cylinder element and the second cylinder element, the first cylinder element comprising a threaded outer surface, the second cylinder element comprising a threaded inner surface, and the third cylinder element(s) comprising a threaded inner surface and a threaded outer surface, each threaded inner surface being configured to mesh with a threaded outer surface, increasing the movement range, i.e. possible elevation, of the lens arrangement of the optical device.

In a further possible implementation form of the first aspect, the first cylinder element, the second cylinder element, and optionally the third cylinder element(s) are at least partially nested within each other and/or within the base element such that a center axis of each cylinder element is coaxial with the optical axis of the lens arrangement, allowing the optical device to have an as small height, i.e. thickness, as possible when in a retracted position.

The optical device is configured to move between a fully retracted end position and a fully extended end position. In a further possible implementation form of the first aspect, the first cylinder element and the third cylinder element(s) being fully enclosed by the second cylinder element, along the optical axis, when the optical device is in the fully retracted end position, each one of the first cylinder element and the third cylinder element(s) being partially offset along the optical axis relative the second cylinder element or relative an adjacent third cylinder element, when the optical device is in the fully extended end position, allowing an as long as possible, yet stable, interconnection between cylinder elements when the optical device is in an extended position.

In a further possible implementation form of the first aspect, a distance between the second cylinder element and the first cylinder element, along the optical axis, being at a maximum when the optical device is in the fully extended end position, facilitating an as large elevation as possible of the lens arrangement.

In a further possible implementation form of the first aspect, center axes of the first cylinder element, the second cylinder element, and the third cylinder element(s) are coaxial with the optical axis, facilitating a simple yet functional optical device.

In a further possible implementation form of the first aspect, the optical device has a variable length along the optical axis and fixed outer dimensions in a plane perpendicular to the optical axis, facilitating a range of movement of the lens arrangement.

According to the first aspect, the actuating element is a planar element configured to extend in a plane perpendicular to the optical axis when the optical device is in the fully retracted end position, and the actuating element is configured to, at least partially, extend in the direction of the optical axis when the optical device is in the fully extended end position, allowing the actuating element to take up as little space as possible in particular when the optical device is in a retracted position.

In a further possible implementation form of the first aspect, the actuating element has a first length along the optical axis when in the fully retracted end, the first length corresponding to a thickness of the planar actuating element, providing an as small actuating element as possible that still has a large actuating stroke.

According to the first aspect, the actuating element comprises a spiral-shaped arm, the arm extending in a gap between the rotation element and the first cylinder element and/or the second cylinder element, facilitating an actuating element which takes up little space yet does not affect the performance of the lens arrangement or movement of other components.

In a further possible implementation form of the first aspect, the spiral-shaped arm comprises at least one step, one step being arranged at a location corresponding to a position of the first cylinder element along the optical axis when the optical device is in the fully extended end position, and optionally one step arranged at a location corresponding to positions of the third cylinder element(s) along the optical axis when the optical device is in the fully extended end position, the step(s) comprising an instantaneous diameter reduction of the spiral-shape as seen in a plane perpendicular to the optical axis, allowing the actuating element to be adapted to the number of cylinder elements and their individual inner diameters.

In a further possible implementation form of the first aspect, the step comprises a transversally extending section of the arm, adapting the path of the actuating element to the inner diameter of the cylinder elements.

In a further possible implementation form of the first aspect, the actuating element does not affect the optical performance of the lens arrangement, allowing a small yet highly efficient actuating element.

In a further possible implementation form of the first aspect, the second end of the actuating element comprises a planar ring element configured to extend in the plane perpendicular to the optical axis regardless of the position of the optical device, providing a small yet secure base for the actuating element.

In a further possible implementation form of the first aspect, the actuating element comprises a conductive material, the second end of the actuating element being electrically connected to a flexible printed circuit extending adjacent the second end, facilitating transmission of electrical signals through the actuating element.

In a further possible implementation form of the first aspect, the actuating element is electrically connected to a flexible printed circuit by means of spring connectors configured to slide relative the flexible printed circuit as the rotation element, and the second end of the actuating element, is being rotated, providing simple yet reliable electrical connection between lens arrangement and electrical supply components.

In a further possible implementation form of the first aspect, the optical structure further comprises an extendable stopping element, a first end of the stopping element being fixed to the first cylinder element and a second end of the stopping element is fixed to the base element, the stopping element being configured to prevent rotation of the first cylinder element around the optical axis, as the rotation element is rotated around the optical axis, maintaining the lens arrangement at a fixed angular position as the rest of the optical device moves between the extend end position and the retracted end position.

In a further possible implementation form of the first aspect, the stopping element comprises a spiral-shaped arm extending between the base element and the actuating element in the direction of the optical axis, facilitating a stopping element which takes up little space yet does not affect the performance of the lens arrangement or movement of other components.

In a further possible implementation form of the first aspect, the drive arrangement comprises an electromagnetic motor, a rotor of the motor being configured to engage the rotation element such that the rotation element is rotated around the optical axis in a first tangential direction and in a second tangential direction, providing a spatially efficient and reliable drive.

In a further possible implementation form of the first aspect, the rotor comprises a lead screw or gear, and wherein the rotation element comprises teeth engaging a thread of the lead screw or the gear, providing a spatially efficient and reliable drive.

In a further possible implementation form of the first aspect, the optical device further comprises at least one gasket, the gasket extending adjacent one of the threaded inner surface and the threaded outer surface, ensuring a tight seal between components such that ingress of moisture and/or dirt is prevented.

In a further possible implementation form of the first aspect, each threaded inner surface and/or a threaded outer surface comprises a thread stop preventing rotation of the first cylinder element and optionally the third cylinder element beyond the thread stop, interlocking the first cylinder element and the third cylinder element with the second cylinder element or with an adjacent third cylinder element, preventing adjacent cylinder elements from separating when reaching an elevation end point.

According to a second aspect, there is provided an electronic apparatus comprising an optical device according to the above, a chassis, and a housing at least partially enclosing the optical device and the chassis, the housing comprising a throughgoing opening configured to accommodate at least the first cylinder element of the optical device. The optical device is small, leaving room for batteries and other components of the apparatus. Furthermore, the optical device is scalable for any required optical device elevation, allowing simple adaptation to any specific apparatus configuration.

In a possible implementation form of the second aspect, the throughgoing opening being configured to accommodate the second cylinder element of the optical device, allowing the optical device to be adapted to a specific apparatus configuration.

In a further possible implementation form of the second aspect, the apparatus further comprises a gasket extending between the throughgoing opening and the first cylinder element and/or the second cylinder element of the optical device, ensuring a tight seal between apparatus housing and optical device such that ingress of moisture and/or dirt is prevented.

In a further possible implementation form of the second aspect, the chassis is configured to carry at least one of the rotation element, the housing, and the flexible printed circuit of the optical device, allowing several components of the apparatus to be preassembled into one unit.

According to a third aspect, there is provided a method of claim 12. Such a method allows use of an optical device which is small, robust, and comprises few components, yet still provides accurate and long strike optics. Furthermore, the method is scalable for any required optical device elevation, and allows for easy manufacture.

In a possible implementation form of the third aspect, the method comprises the further step of providing at least one third cylinder element between the first cylinder element and the second cylinder element such that the first cylinder element is accommodated within one third cylinder element, and each third cylinder element is accommodated within one of an adjacent third cylinder element and the second cylinder element. The movement of the first cylinder element and the lens arrangement along the optical axis generates a corresponding movement of the third cylinder element(s) along the optical axis, increasing the movement range, i.e. possible elevation, of the lens arrangement of the optical device.

These and other aspects will be apparent from the embodiment(s) described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1a shows a perspective view of an electronic apparatus in accordance with an example of the embodiments of the disclosure, wherein the optical device of the apparatus is in a fully retracted end position;
Fig. 1b shows a perspective view of an electronic apparatus in accordance with an example of the embodiments of the disclosure, wherein the optical device of the apparatus is in a fully extended end position;
Fig. 2a shows a perspective view of an optical device in accordance with an example of the embodiments of the disclosure, wherein the optical device is in a fully retracted end position;
Figs. 2b and 2c show top and bottom perspective views of the optical device of Fig. 2a, wherein the optical device is in a fully extended end position;
Fig. 3 shows a partial cross-sectional view of an optical device in accordance with an example of the embodiments of the disclosure, wherein the optical device is in a fully extended end position;
Fig. 4 shows a partial cross-sectional view of an optical device in accordance with an example of the embodiments of the disclosure, wherein the optical device is in a fully retracted end position;
Fig. 5 shows an exploded view of an optical device in accordance with an example of the embodiments of the disclosure;
Fig. 6 shows a bottom perspective view of an optical device in accordance with an example of the embodiments of the disclosure, wherein the optical device is in a fully retracted end position;
Fig. 7 shows a partial cross-sectional view of an optical device in accordance with an example of the embodiments of the disclosure, wherein the optical device is in a fully extended end position;
Fig. 8a shows a perspective view of an actuating element of an optical device in accordance with an example of the embodiments of the disclosure, the actuating element being extended as when the optical device is in a fully extended end position;
Fig. 8b shows a perspective view of an actuating element of an optical device in accordance with an example of the embodiments of the disclosure, the actuating element being planar as when the optical device is in a fully retracted end position;
Fig. 9 shows a perspective view of a rotation element, a drive arrangement, and an actuating element of an optical device in accordance with an example of the embodiments of the disclosure, as when the optical device is in a fully retracted end position;
Figs. 10a and 10b show top and bottom perspective views of a lens arrangement, a rotation element, a drive arrangement, and an actuating element of an optical device in accordance with an example of the embodiments of the disclosure, as when the optical device is in a fully retracted end position;
Figs. 11a and 11b show bottom perspective views of an optical device in accordance with examples of the embodiments of the disclosure, wherein the optical device is in extended positions;
Fig. 12 shows a perspective view of an actuating element of an optical device in accordance with an example of the embodiments of the disclosure, as when the optical device is in a fully retracted end position;
Fig. 13a shows a perspective view of a lens arrangement of an optical device in accordance with an example of the embodiments of the disclosure;
Fig. 13b shows an exploded view of the lens arrangement according to Fig 13a and a first cylinder element in accordance with an example of the embodiments of the disclosure;
Fig. 13c shows a perspective view of the elements according to Fig 13b, wherein the elements have been assembled;
Fig. 14 shows a perspective view of a lens arrangement and an actuating element of an optical device in accordance with an example of the embodiments of the disclosure, as when the optical device is in a fully extended end position;
Fig. 15 shows a partial cross-sectional view of an optical device in accordance with an example of the embodiments of the disclosure, wherein the optical device is in a fully retracted end position;
Fig. 16 shows a partial cross-sectional view of an optical device in accordance with an example of the embodiments of the disclosure, wherein the optical device is in a fully extended end position;
Fig. 17 shows a partially exploded view of an optical device in accordance with an example of the embodiments of the disclosure;
Fig. 18 shows a partial cross-sectional view of an optical device in accordance with an example of the embodiments of the disclosure, wherein the optical device is in a fully extended end position.

### DETAILED DESCRIPTION

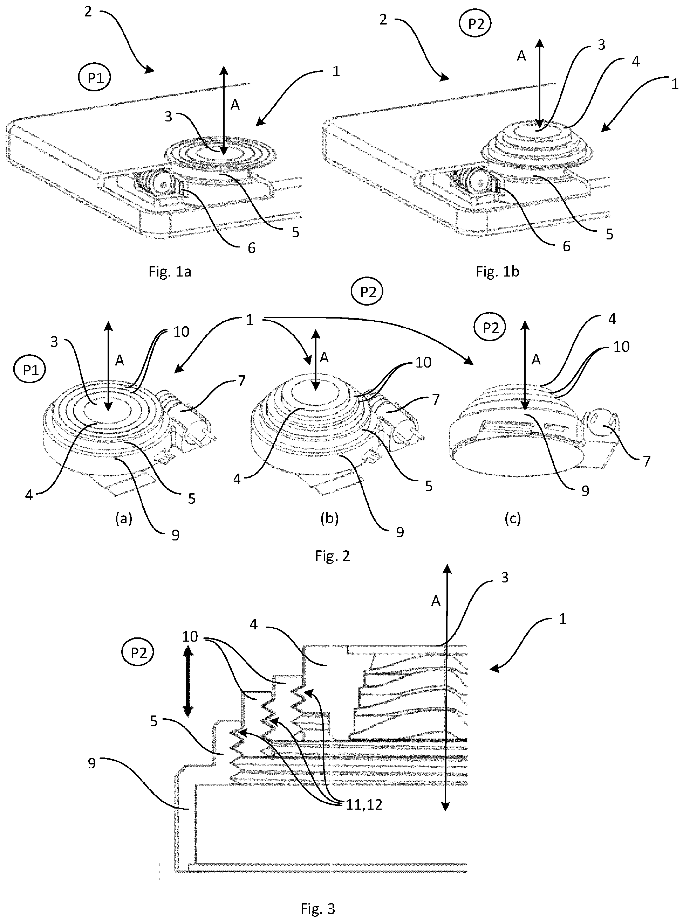

Figs. 1a and 1 b show an electronic apparatus 2, such as a smartphone or tablet, comprising an optical device 1. Fig. 1a shows the optical device 1 in a fully retracted end position P1 and Fig. 1b shows the optical device 1 in a fully extended end position P2.

The optical device 1 comprises a first cylinder element 4 configured to accommodate the lens arrangement 3, and to move along the optical axis A, a second cylinder element 5 configured to accommodate the first cylinder element 4, a rotation element 6, a drive arrangement 7 configured to rotate the rotation element 6 around the optical axis A, and an extendable actuating element 8. A first end of the actuating element 8 is fixed to the first cylinder element 4 and a second end of the actuating element 8 is fixed to the rotation element 6. The actuating element 8 is configured to generate movement of the first cylinder element 4 along the optical axis A, with respect to the second cylinder element 5, as the rotation element 6 is rotated around the optical axis A.

As shown in more detail in e.g. Figs. 2a, 3 and 4, the optical device 1 comprises a lens arrangement 3 which defines the optical axis A of both the lens arrangement 3 and the optical device 1.

A first cylinder element 4 is configured to accommodate, i.e. carry, the lens arrangement 3 and to move along the optical axis A.

A second cylinder element 5 is configured to accommodate i.e. carry, the first cylinder element 4.

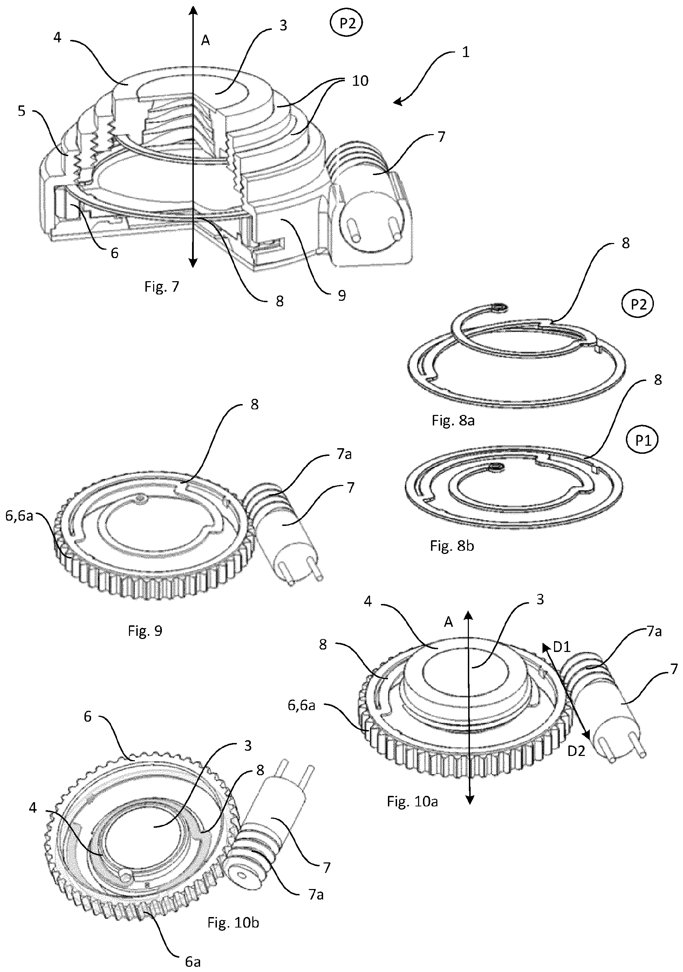

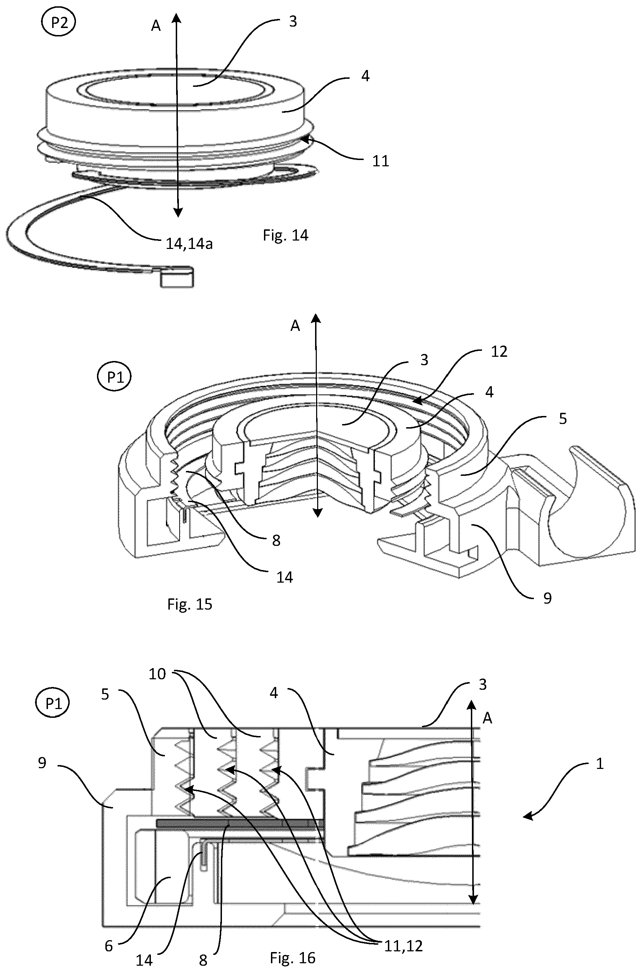

The optical device 1 may further comprise a stationary base element 9 configured to accommodate the rotation element 6 and the second cylinder element 5. The second cylinder element 5 may be a part of the base element 9, as shown in Figs. 3 and 7. The second cylinder element 5 may also be a separate element connected to the base element 9, as suggested in Fig. 16.

The optical device 1 may have a variable length along the optical axis A and fixed outer dimensions in a plane perpendicular to the optical axis A. The distance between the second cylinder element 5 and the first cylinder element 4, along the optical axis A, may be at a maximum when the optical device 1 is in the fully extended end position P2, as shown in Figs. 1b, 2b, 2c, 3, 7, and 18.

The optical device may comprise at least one third cylinder element 10 interposed between the first cylinder element 4 and the second cylinder element 5, as shown in Figs. 3 to 7, 11a and 11b, 15, 16, and 18. The center axes of the first cylinder element 4, the second cylinder element 5, and the third cylinder elements 10 may be coaxial with the optical axis A. Each first cylinder element 4 and optionally the third cylinder elements 10 are configured to accommodate and/or be accommodated within the second cylinder element 5 or an adjacent third cylinder element 10 in a mating configuration, in other words, the first cylinder element 4, the second cylinder element 5, and optionally the third cylinder elements 10 may be at least partially nested within each other and/or within the base element 9 such that a center axis of each cylinder element is coaxial with the optical axis A of the lens arrangement 3. When the optical device 1 in the fully retracted end position P1, each cylinder element may be fully enclosed by and/or fully enclosing an adjacent cylinder element. When the optical device 1 the fully extended end position P2, the first cylinder element 4 and/or each third cylinder element 10 may partially protrude from an adjacent second cylinder element 5 or third cylinder element 10, while being partially enclosed by the very same adjacent cylinder element.

The first cylinder element 4 may comprise a threaded outer surface 11, the second cylinder element 5 may comprise a threaded inner surface 12, and the third cylinder elements 10 may comprise a threaded inner surface 12 as well as a threaded outer surface 11, each threaded inner surface 12 being configured to mesh with a threaded outer surface 11. In an embodiment comprising only a first cylinder element 4 and a second cylinder element 5, the threaded outer surface 11 of the first cylinder element 4 directly engages the threaded inner surface 12 of the second cylinder element 5. In an embodiment comprising a first cylinder element 4, two third cylinder elements 10, and a second cylinder element 5, as shown in Figs. 3, 4, 5, 7, 16, and 18, the threaded outer surface 11 of the first cylinder element 4 engages a threaded inner surface 12 of the most adjacent third cylinder element 10, the threaded outer surface 11 of the most adjacent third cylinder element 10 engaging the threaded inner surface 12 of a further third cylinder element 10, the threaded outer surface 11 of the further third cylinder element 10 engaging the threaded inner surface 12 of the second cylinder element 5.

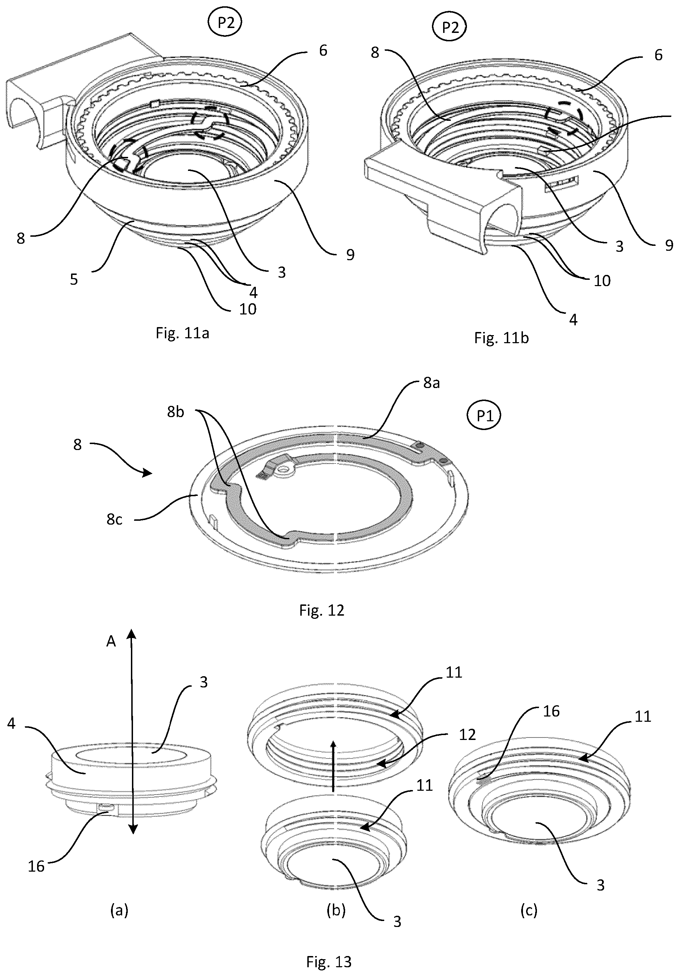

Each threaded inner surface 12 and/or a threaded outer surface 11 may comprise a thread stop 16, as shown in Figs. 13a to 13c, the thread stop 16 preventing rotation of the first cylinder element 4 and optionally the third cylinder element 10 beyond the thread stop 16, interlocking the first cylinder element 4 and the third cylinder element 10 with the second cylinder element 5 or with an adjacent third cylinder element 10.

As mentioned above, the optical device 1 is configured to move between a fully retracted end position P1 and a fully extended end position P2. The first cylinder element 4 and the third cylinder elements 10 may be fully enclosed by the second cylinder element 5, along the optical axis A, when the optical device 1 is in the fully retracted end position P1. Each one of the first cylinder element 4 and the third cylinder elements 10 may be partially offset along the optical axis A relative the second cylinder element 5 or relative an adjacent third cylinder element 10, when the optical device 1 is in the fully extended end position P2.

The optical device 1 further comprises a rotation element 6 and a drive arrangement 7 configured to rotate the rotation element 6 around the optical axis A. The rotation element 6 is preferably shaped as a hollow cylinder or ring and has a center axis which is co-axial with the optical axis A. The rotation element 6 is preferably arranged adjacent the second cylinder element 5 such that it does not affect the movement of the cylinder elements along optical axis A or the optical path of the lens arrangement 3.

The drive arrangement 7 may comprise an electromagnetic motor, a rotor 7a of the motor being configured to engage the rotation element 6 such that the rotation element 6 is rotated around the optical axis A in a first tangential direction D1 and in a second tangential direction D2, as shown in Fig. 10a.

The rotor 7a may comprise a lead screw or gear, and the rotation element 6 may comprise teeth 6a engaging a thread of the lead screw or the gear, as show in Figs. 9, 10a, 10b, and 17. The teeth 6a are preferably arranged along a peripheral outer surface of the rotation element 6, such that the rotation element 6 resembles and functions as a gear wheel engaging the lead screw of rotor 7a.

A first end of an extendable actuating element 8 is fixed to the first cylinder element 4 and a second end of the actuating element 8 is fixed to the rotation element 6. The actuating element 8 is configured to generate movement of the first cylinder element 4, along the optical axis A and with respect to the second cylinder element 5, as the rotation element 6 is rotated around the optical axis A.

The actuating element 8 is a planar element configured to extend in a plane perpendicular to the optical axis A when the optical device 1 is in the fully retracted end position P1, as shown in Fig. 8b, 9 to 10b, and 12. The actuating element 8 has, in other words, a first length along the optical axis A when in the fully retracted end position P1, the first length corresponding to a thickness of the planar actuating element 8. The actuating element 8 is also configured to, at least partially, extend in the direction of the optical axis A when the optical device 1 is in the fully extended end position P2, as shown in Figs. 7, and 8a.

The actuating element 8 comprises a spiral-shaped arm 8a, the arm 8a extending in a gap between the rotation element 6 and the first cylinder element 4 and/or the second cylinder element 5. Furthermore, when the arm 8a has been extended in the direction of optical axis A, the arm 8a extend in corresponding gaps between the second cylinder element 5 and the first cylinder element 4 or an adjacent third cylinder element 10, between adjacent third cylinder elements 10, and/or between the first cylinder element 4 and an adjacent third cylinder element 10, as shown in Fig. 7. Hence, the actuating element 8 does not affect the optical performance of the lens arrangement 3.

The spiral-shaped arm 8a may comprise at least one step 8b, one step 7b being arranged at a location corresponding to a position of the first cylinder element 4 along the optical axis A when the optical device 1 is in the fully extended end position P2. Correspondingly, at least one step 8b may be arranged at a location corresponding to the positions of the third cylinder element(s) 10 along the optical axis A when the optical device 1 is in the fully extended end position P2, as suggested in Fig. 11a.

Each step 8b comprises an instantaneous diameter reduction of the spiral-shape as seen in a plane perpendicular to the optical axis A. In other words, the step 8b comprises a transversally extending section of the arm 8a, transversally extending preferably meaning radially extending in embodiments where ethe spiral-shaped arm 8a extends substantially cylindrically.

The second end of the actuating element 8 may comprise a planar ring element 8c configured to extend in the plane perpendicular to the optical axis A regardless of the position of the optical device 1. The arm 8a may be connected to, and extend from, the planar ring element 8c. Hence, the planar ring element 8c does not affect the optical performance of the lens arrangement 3.

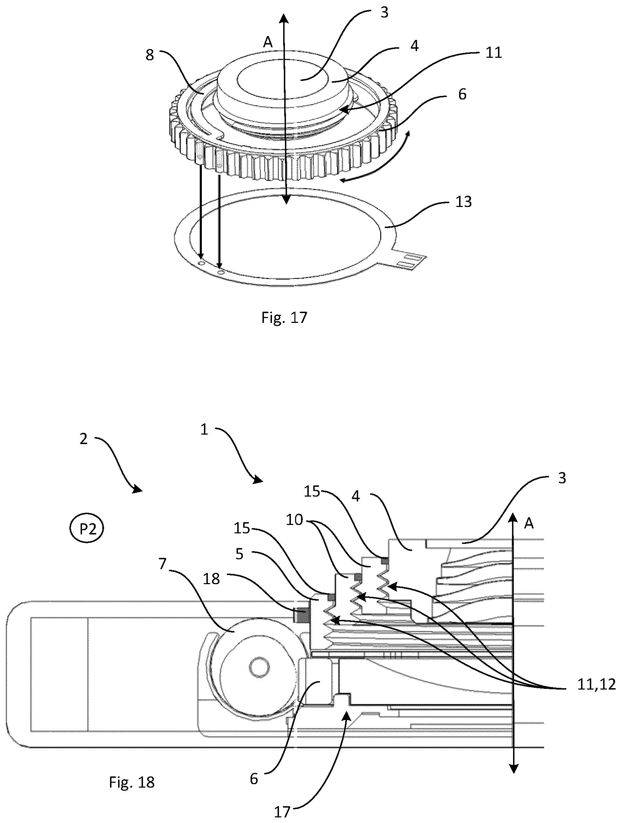

The actuating element 8 may comprises a conductive material, the second end of the actuating element 8 being electrically connected to a flexible printed circuit 13 extending adjacent the second end of the actuating element 8. The actuating element 8 may be electrically connected to the flexible printed circuit 13 by means of spring connectors, as shown in Fig. 17, configured to slide relative the flexible printed circuit 13 as the rotation element 6, and the second end of the actuating element 8, is being rotated. The arm 8a and a limited portion of the planar ring element 8c may be conductive as illustrated in Fig. 12.

The optical device 1 may also comprise an extendable stopping element 14, shown in Figs. 14 to 16. A first end of the stopping element 14 is fixed to the first cylinder element 4 and a second end of the stopping element 14 is fixed to the base element 9. Hence, the stopping element 14 prevents rotation of the first cylinder element 4 around the optical axis A, as the rotation element 6 is rotated around the optical axis A. Similar to the actuating element 8, the stopping element 14 may comprise a spiral-shaped arm 14a extending between the base element 9 and the actuating element 8 in the direction of the optical axis A. As show in Fig. 16, the stopping element 14 may extend in a plane parallel with the plane of the plane of the actuating element 8 when in the fully retracted end position P1, the actuating element 8 preferably being arranged closer to the first, second, and third cylinder elements 4, 5, 10 than the stopping element 14. When in the fully extended end position P2, the actuating element 8 and the stopping element 14 may extend as substantially parallel spirals along the direction of optical axis A.

The optical device 1 may also comprise at least one gasket 15, the gasket 15 extending adjacent one of the threaded inner surface 12 and the threaded outer surface 11 as shown in Fig. 18.

The electronic apparatus 2 comprises, in addition to the optical device 1, a chassis 17 and a housing 9 at least partially enclosing the optical device 1 and the chassis 17 as shown in Fig. 16. The chassis 17 may be the carrier of a range of apparatus components, as shown in Fig. 18, the chassis 17 may for example be configured to carry at least one of the rotation element 6, the housing 9, and the flexible printed circuit 13 of the optical device 1.

The housing 9 may comprise a throughgoing opening configured to accommodate at least the first cylinder element 4 of the optical device 1. The throughgoing opening may also be configured to accommodate the second cylinder element 5 of the optical device 1. A gasket 18 may extend between the throughgoing opening and the first cylinder element 4 (not shown) and/or the second cylinder element 5 of the optical device 1, as shown in Fig. 18.

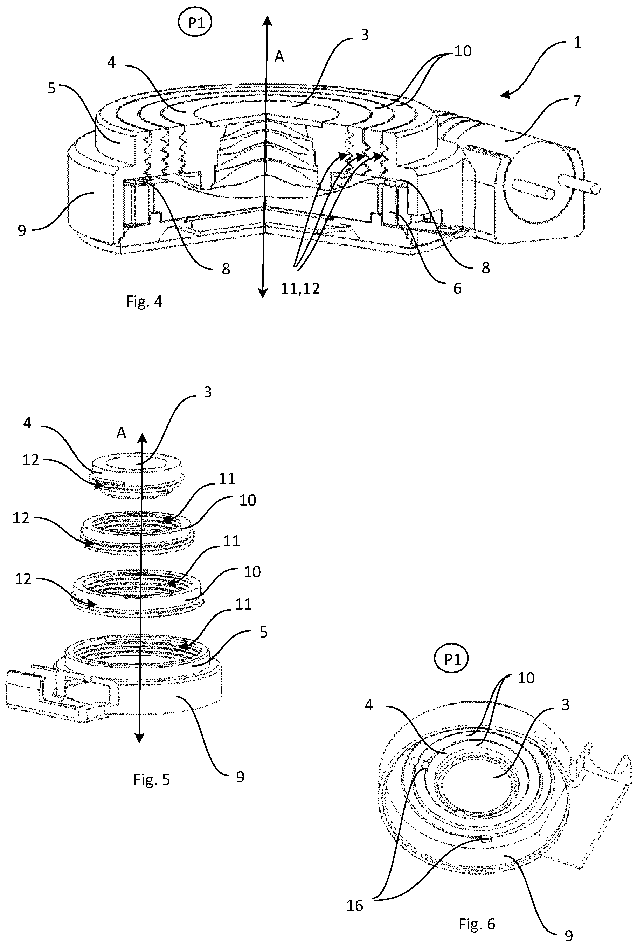

The present invention furthermore relates to a method of providing a magnified image of an object. The method comprises a number of steps, including providing a lens arrangement 3 defining an optical axis O and a first cylinder element 4 accommodating the lens arrangement 3, as shown in Fig. 13b. A second cylinder element 5 configured to accommodate the first cylinder element 4 in a mating configuration is provided, a s shown in Fig. 5. A rotation element 6 and an extendable actuating element 8 are also provided, a first end of the actuating element 8 being fixed to the first cylinder element 4 and a second end of the actuating element 8 being fixed to the rotation element 6, as shown in Fig. 17.

The rotation element 6 is driven to rotate around the optical axis A in one of a first tangential direction D1 and a second tangential direction D2, as shown in Fig. 10a, such that, when the rotation element 6 rotates in the first tangential direction D1, the first cylinder element 4 and the lens arrangement 3 are moved, along the optical axis A, towards a fully extended end position P2 with respect to the second cylinder element 5, and such that, when the rotation element 6 rotates in the second tangential direction D2, the first cylinder element 4 and the lens arrangement 3 are moved, along the optical axis A, towards a fully retracted end position P1 with respect to the second cylinder element 5. The first cylinder element 4 and the lens arrangement 3 are moved along the optical axis A in response to extension or folding of the actuating element 8 along the optical axis A.

The method may further comprise the step of providing at least one third cylinder element 10 between the first cylinder element 4 and the second cylinder element 5 such that the first cylinder element 4 is accommodated within one third cylinder element 10, and each third cylinder element 10 is accommodated within one of an adjacent third cylinder element 10 and the second cylinder element 5, as shown in Fig. 5. The movement of the first cylinder element 4 and the lens arrangement 3 along the optical axis A generates a corresponding movement of the third cylinder elements 10 along the optical axis A.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. An optical device (1) for an electronic apparatus (2), said optical device (1) comprising
- a lens arrangement (3) defining an optical axis (A);
- a first cylinder element (4) configured to accommodate said lens arrangement (3), and
to move along said optical axis (A);
- a second cylinder element (5) configured to accommodate said first cylinder element (4),
- a rotation element (6);
- a drive arrangement (7) configured to rotate said rotation element (6) around said optical axis (A); and
- an extendable actuating element (8), a first end of said actuating element (8) being fixed to said first cylinder element (4) and a second end of said actuating element (8) being fixed to said rotation element (6),
said actuating element (8) being configured to generate movement of said first cylinder element (4) along said optical axis (A), with respect to said second cylinder element (5), as said rotation element (6) is rotated around said optical axis (A),
wherein said actuating element (8) is a planar element configured to extend in a plane perpendicular to said optical axis (A) when said optical device (1) is in a fully retracted end position (P1), and wherein said actuating element (8) is configured to, at least partially, extend in the direction of said optical axis (A) when said optical device (1) is in a fully extended end position (P2),
wherein said actuating element (8) comprises a spiral-shaped arm (8a), said arm (8a) extending in a gap between said rotation element (6) and said first cylinder element (4) and/or said second cylinder element (5).

2. The optical device (1) according to claim 1, further comprising a stationary base element (9) configured to accommodate said rotation element (6) and said second cylinder element (5).

3. The optical device (1) according to claim 1 or 2, further comprising at least one third cylinder element (10) interposed between said first cylinder element (4) and said second cylinder element (5), said first cylinder element (4) comprising a threaded outer surface (11), said second cylinder element (5) comprising a threaded inner surface (12), and said third cylinder element(s) (10) comprising a threaded inner surface (12) and a threaded outer surface (11), each threaded inner surface (12) being configured to mesh with a threaded outer surface (11).

4. The optical device (1) according to any one of the previous claims, said first cylinder element (4) and said third cylinder element(s) (10) being fully enclosed by said second cylinder element (5), along said optical axis (A), when said optical device (1) is in said fully retracted end position (P1), each one of said first cylinder element (4) and said third cylinder element(s) (10) being partially offset along said optical axis (A) relative said second cylinder element (5) or relative an adjacent third cylinder element (10), when said optical device (1) is in said fully extended end position (P2).

5. The optical device (1) according to any one of claims 1 to 4, wherein said spiral-shaped arm (8a) comprises at least one step (8b), one step (7b) being arranged at a location corresponding to a position of said first cylinder element (4) along said optical axis (A) when said optical device (1) is in said fully extended end position (P2), and optionally
one step (8b) arranged at a location corresponding to positions of said third cylinder element(s) (10) along said optical axis (A) when said optical device (1) is in said fully extended end position (P2), said step(s) (8b) comprising an instantaneous diameter reduction of said spiral-shape as seen in a plane perpendicular to said optical axis (A).

6. The optical device (1) according to any one of the previous claims, wherein said second end of said actuating element (8) comprises a planar ring element (8c) configured to extend in said plane perpendicular to said optical axis (A) regardless of the position of said optical device (1).

7. The optical device (1) according to any one of the previous claims, wherein said actuating element (8) comprises a conductive material, said second end of said actuating element (8) being electrically connected to a flexible printed circuit (13) extending adjacent said second end.

8. The optical device (1) according to any one of the previous claims, wherein said optical device further comprises an extendable stopping element (14), a first end of said stopping element (14) being fixed to said first cylinder element (4) and a second end of said stopping element (14) is fixed to said base element (9), said stopping element (14) being configured to prevent rotation of said first cylinder element (4) around said optical axis (A), as said rotation element (6) is rotated around said optical axis (A).

9. The optical device (1) according to claim 8, wherein said stopping element (14) comprises a spiral-shaped arm (14a) extending between said base element (9) and said actuating element (8) in the direction of said optical axis (A).

10. The optical device (1) according to any one of the previous claims, wherein said drive arrangement (7) comprises an electromagnetic motor, a rotor (7a) of said motor being configured to engage said rotation element (6) such that said rotation element (6) is rotated around said optical axis (A) in a first tangential direction (D1) and in a second tangential direction (D2).

11. An electronic apparatus (2) comprising an optical device (1) according to any one of claims 1 to 10, a chassis (17), and a housing (9) at least partially enclosing said optical device (1) and said chassis (17),
said housing (9) comprising a throughgoing opening configured to accommodate at least the first cylinder element (4) of said optical device (1).

12. A method of providing a magnified image of an object, said method comprising the steps of:
- providing a lens arrangement (3) defining an optical axis (O) and a first cylinder element (4) accommodating said lens arrangement (3);
- providing a second cylinder element (5) configured to accommodate said first cylinder element (4) in a mating configuration;
- providing a rotation element (6) and an extendable actuating element (8), a first end of said actuating element (8) being fixed to said first cylinder element (4) and a second end of said actuating element (8) being fixed to said rotation element (6);
- driving said rotation element (6) to rotate around said optical axis (A) in one of a first tangential direction (D1) and a second tangential direction (D2),
wherein, when said rotation element (6) rotates in said first tangential direction (D1), said first cylinder element (4) and said lens arrangement (3) are moved, along said optical axis (A), towards a fully extended end position (P2) with respect to said second cylinder element (5), and
wherein, when said rotation element (6) rotates in said second tangential direction (D2), said first cylinder element (4) and said lens arrangement (3) are moved, along said optical axis (A), towards a fully retracted end position (P1) with respect to said second cylinder element (5),
said first cylinder element (4) and said lens arrangement (3) being moved along said optical axis (A) in response to extension or folding of said actuating element (8) along said optical axis (A),
wherein said actuating element (8) is a planar element configured to extend in a plane perpendicular to said optical axis (A) when said optical device (1) is in the fully retracted end position (P1), and wherein said actuating element (8) is configured to, at least partially, extend in the direction of said optical axis (A) when said optical device (1) is in the fully extended end position (P2),
wherein said actuating element (8) comprises a spiral-shaped arm (8a), said arm (8a) extending in a gap between said rotation element (6) and said first cylinder element (4) and/or said second cylinder element (5).

13. The method according to claim 12, comprising the further step of providing at least one third cylinder element (10) between said first cylinder element (4) and said second cylinder element (5) such that said first cylinder element (4) is accommodated within one third cylinder element (10), and
each third cylinder element (10) is accommodated within one of an adjacent third cylinder element (10) and said second cylinder element (5),
said movement of said first cylinder element (4) and said lens arrangement (3) along said optical axis (A) generating a corresponding movement of said third cylinder element(s) (10) along said optical axis (A).

## Patentansprüche

1. Optische Vorrichtung (1) für ein elektronisches Gerät (2), wobei die optische Vorrichtung (1) Folgendes umfasst
- eine Linsenanordnung (3), die eine optische Achse (A) definiert;
- ein erstes Zylinderelement (4), das dazu konfiguriert ist, die Linsenanordnung (3) aufzunehmen, und
sich entlang der optischen Achse (A) zu bewegen;
- ein zweites Zylinderelement (5), das dazu konfiguriert ist, das erste Zylinderelement (4) aufzunehmen,
- ein Rotationselement (6);
- eine Antriebsanordnung (7), die dazu konfiguriert ist, das Rotationselement (6) um die optische Achse (A) herum zu rotieren; und
- ein ausziehbares Betätigungselement (8), wobei ein erstes Ende des Betätigungselements (8) an dem ersten Zylinderelement (4) befestigt ist und ein zweites Ende des Betätigungselements (8) an dem Rotationselement (6) befestigt ist,
wobei das Betätigungselement (8) dazu konfiguriert ist, eine Bewegung des ersten Zylinderelements (4) entlang der optischen Achse (A) in Bezug auf das zweite Zylinderelement (5) zu erzeugen, wenn das Rotationselement (6) um die optische Achse (A) herum rotiert,
wobei das Betätigungselement (8) ein planares Element ist, das dazu konfiguriert ist, sich in einer Ebene senkrecht zu der optischen Achse (A) zu erstrecken, wenn sich die optische Vorrichtung (1) in einer vollständig eingezogenen Endposition (P1) befindet, und wobei das Betätigungselement (8) dazu konfiguriert ist, sich zumindest teilweise in die Richtung der optischen Achse (A) zu erstrecken, wenn sich die optische Vorrichtung (1) in einer vollständig ausgezogenen Endposition (P2) befindet,
wobei das Betätigungselement (8) einen spiralförmigen Arm (8a) umfasst, wobei sich der Arm (8a) in einem Spalt zwischen dem Rotationselement (6) und dem ersten Zylinderelement (4) und/oder dem zweiten Zylinderelement (5) erstreckt.

2. Optische Vorrichtung (1) nach Anspruch 1, ferner umfassend ein stationäres Basiselement (9), das dazu konfiguriert ist, das Rotationselement (6) und das zweite Zylinderelement (5) aufzunehmen.

3. Optische Vorrichtung (1) nach Anspruch 1 oder 2, ferner umfassend zumindest ein drittes Zylinderelement (10), das zwischen dem ersten Zylinderelement (4) und dem zweiten Zylinderelement (5) eingefügt ist, wobei das erste Zylinderelement (4) eine Gewindeaußenfläche (11) umfasst, das zweite Zylinderelement (5) eine Gewindeinnenfläche (12) umfasst und das/die dritte(n) Zylinderelement(e) (10) eine Gewindeinnenfläche (12) und eine Gewindeaußenfläche (11) umfasst/umfassen, wobei jede Gewindeinnenfläche (12) dazu konfiguriert ist, mit einer Gewindeaußenfläche (11) ineinanderzugreifen.

4. Optische Vorrichtung (1) nach einem der vorhergehenden Ansprüche, wobei das erste Zylinderelement (4) und das/die dritte(n) Zylinderelement(e) (10) entlang der optischen Achse (A) vollständig von dem zweiten Zylinderelement (5) umschlossen sind, wenn sich die optische Vorrichtung (1) in der vollständig eingezogenen Endposition (P1) befindet, wobei jedes des/der ersten Zylinderelements/-e (4) und des/der dritten Zylinderelements/-e (10) entlang der optischen Achse (A) relativ zu dem zweiten Zylinderelement (5) oder relativ zu einem benachbarten dritten Zylinderelement (10) teilweise versetzt ist/sind, wenn sich die optische Vorrichtung (1) in der vollständig ausgezogenen Endposition (P2) befindet.

5. Optische Vorrichtung (1) nach einem der Ansprüche 1 bis 4, wobei der spiralförmige Arm (8a) zumindest eine Stufe (8b) umfasst, wobei eine Stufe (7b) an einer Stelle entsprechend einer Position des ersten Zylinderelements (4) entlang der optischen Achse (A) angeordnet ist, wenn sich die optische Vorrichtung (1) in der vollständig ausgezogenen Endposition (P2) befindet, und optional eine Stufe (8b) an einer Stelle entsprechend Positionen des/der dritten Zylinderelements/-e (10) entlang der optischen Achse (A) angeordnet ist, wenn sich die optische Vorrichtung (1) in der vollständig ausgezogenen Endposition (P2) befindet, wobei die Stufe(n) (8b) eine sofortige Durchmesserreduzierung der Spiralform, betrachtet in einer Ebene senkrecht zu der optischen Achse (A), umfasst/umfassen.

6. Optische Vorrichtung (1) nach einem der vorhergehenden Ansprüche, wobei das zweite Ende des Betätigungselements (8) ein ebenes Ringelement (8c) umfasst, das dazu konfiguriert ist, sich unabhängig von der Position der optischen Vorrichtung (1) in der Ebene senkrecht zu der optischen Achse (A) zu erstrecken.

7. Optische Vorrichtung (1) nach einem der vorhergehenden Ansprüche, wobei das Betätigungselement (8) ein leitfähiges Material aufweist, das zweite Ende des Betätigungselements (8) elektrisch mit einer flexiblen gedruckten Schaltung (13) verbunden ist, die sich benachbart an dem zweiten Ende erstreckt.

8. Optische Vorrichtung (1) nach einem der vorhergehenden Ansprüche, wobei die optische Vorrichtung ferner ein ausziehbares Anschlagelement (14) umfasst, wobei ein erstes Ende des Anschlagelements (14) an dem ersten Zylinderelement (4) befestigt ist und ein zweites Ende des Anschlagelements (14) an dem Basiselement (9) befestigt ist, wobei das Anschlagelement (14) dazu konfiguriert ist, eine Rotation des ersten Zylinderelements (4) um die optische Achse (A) zu verhindern, wenn das Rotationselement (6) um die optische Achse (A) rotiert.

9. Optische Vorrichtung (1) nach Anspruch 8, wobei das Anschlagelement (14) einen spiralförmigen Arm (14a) umfasst, der sich zwischen dem Basiselement (9) und dem Betätigungselement (8) in der Richtung der optischen Achse (A) erstreckt.

10. Optische Vorrichtung (1) nach einem der vorhergehenden Ansprüche, wobei die Antriebsanordnung (7) einen elektromagnetischen Motor umfasst, wobei ein Rotor (7a) des Motors dazu konfiguriert ist, mit dem Rotationselement (6) derart in Eingriff zu stehen, das Rotationselement (6) in einer ersten tangentialen Richtung (D1) und in einer zweiten tangentialen Richtung (D2) um die optische Achse (A) herum rotiert.

11. Elektronisches Gerät (2), umfassend eine optische Vorrichtung (1) nach einem der Ansprüche 1 bis 10, ein Chassis (17) und ein Gehäuse (9), das die optische Vorrichtung (1) und das Chassis (17) zumindest teilweise umschließt,
wobei das Gehäuse (9) eine durchgehende Öffnung aufweist, die dazu konfiguriert ist, zumindest das erste Zylinderelement (4) der optischen Vorrichtung (1) aufzunehmen.

12. Verfahren zum Bereitstellen eines vergrößerten Bildes eines Objekts, wobei das Verfahren die folgenden Schritte umfasst:
- Bereitstellen einer Linsenanordnung (3), die eine optische Achse (O) definiert, und eines ersten Zylinderelements (4), das die Linsenanordnung (3) aufnimmt;
- Bereitstellen eines zweiten Zylinderelements (5), das dazu konfiguriert ist, das erste Zylinderelement (4) in einer passenden Konfiguration aufzunehmen;
- Bereitstellen eines Rotationselements (6) und eines ausziehbaren Betätigungselements (8), wobei ein erstes Ende des Betätigungselements (8) an dem ersten Zylinderelement (4) befestigt ist und ein zweites Ende des Betätigungselements (8) an dem Rotationselement (6) befestigt ist;
- Antreiben des Rotationselements (6) zum Rotieren um die optische Achse (A) in einer ersten tangentialen Richtung (D1) und einer zweiten tangentialen Richtung (D2),
wobei, wenn sich das Rotationselement (6) in der ersten tangentialen Richtung (D1) dreht, das erste Zylinderelement (4) und die Linsenanordnung (3) entlang der optischen Achse (A) in Richtung einer vollständig ausgezogenen Endposition (P2) in Bezug auf das zweite Zylinderelement (5) bewegt werden, und
wobei, wenn das Rotationselement (6) in der zweiten tangentialen Richtung (D2) rotiert, das erste Zylinderelement (4) und die Linsenanordnung (3) entlang der optischen Achse (A) in Richtung einer vollständig eingezogenen Endposition (P1) in Bezug auf das zweite Zylinderelement (5) bewegt werden,
wobei das erste Zylinderelement (4) und die Linsenanordnung (3) als Reaktion auf das Ausziehen oder Einklappen des Betätigungselements (8) entlang der optischen Achse (A) bewegt werden,
wobei das Betätigungselement (8) ein planares Element ist, das dazu konfiguriert ist, sich in einer Ebene senkrecht zu der optischen Achse (A) zu erstrecken, wenn sich die optische Vorrichtung (1) in der vollständig eingezogenen Endposition (P1) befindet, und wobei das Betätigungselement (8) dazu konfiguriert ist, sich zumindest teilweise in die Richtung der optischen Achse (A) zu erstrecken, wenn sich die optische Vorrichtung (1) in der vollständig ausgezogenen Endposition (P2) befindet,
wobei das Betätigungselement (8) einen spiralförmigen Arm (8a) umfasst, wobei sich der Arm (8a) in einem Spalt zwischen dem Rotationselement (6) und dem ersten Zylinderelement (4) und/oder dem zweiten Zylinderelement (5) erstreckt.

13. Verfahren nach Anspruch 12, umfassend den weiteren Schritt des Bereitstellens zumindest eines dritten Zylinderelements (10) zwischen dem ersten Zylinderelement (4) und dem zweiten Zylinderelement (5) derart, dass das erste Zylinderelement (4) innerhalb eines dritten Zylinderelements (10) aufgenommen ist, und
jedes dritte Zylinderelement (10) innerhalb eines benachbarten dritten Zylinderelements (10) oder des zweiten Zylinderelements (5) aufgenommen ist,
wobei die Bewegung des ersten Zylinderelements (4) und der Linsenanordnung (3) entlang der optischen Achse (A) eine entsprechende Bewegung des/der dritten Zylinderelements/-e (10) entlang der optischen Achse (A) erzeugt.

## Revendications

1. Dispositif optique (1) pour un appareil électronique (2), ledit dispositif optique (1) comprenant
- un agencement de lentilles (3) définissant un axe optique (A) ;
- un premier élément cylindrique (4) configuré pour accueillir ledit agencement de lentilles (3), et
se déplacer le long dudit axe optique (A) ;
- un deuxième élément cylindrique (5) configuré pour accueillir ledit premier élément cylindrique (4),
- un élément de rotation (6) ;
- un agencement d'entraînement (7) configuré pour faire tourner ledit élément de rotation (6) autour dudit axe optique (A) ; et
- un élément d'actionnement extensible (8), une première extrémité dudit élément d'actionnement (8) étant fixée audit premier élément cylindrique (4) et une seconde extrémité dudit élément d'actionnement (8) étant fixée audit élément de rotation (6),
ledit élément d'actionnement (8) étant configuré pour générer un mouvement dudit premier élément cylindrique (4) le long dudit axe optique (A), par rapport audit deuxième élément cylindrique (5), pendant que ledit élément de rotation (6) est tourné autour dudit axe optique (A),
dans lequel ledit élément d'actionnement (8) est un élément plan configuré pour se prolonger dans un plan perpendiculaire audit axe optique (A) lorsque ledit dispositif optique (1) est dans une position d'extrémité entièrement rétractée (P1), et dans lequel ledit élément d'actionnement (8) est configuré pour, au moins partiellement, se prolonger dans la direction dudit axe optique (A) lorsque ledit dispositif optique (1) est dans une position d'extrémité entièrement déployée (P2),
dans lequel ledit élément d'actionnement (8) comprend un bras en forme de spirale (8a), ledit bras (8a) se prolongeant dans un espace entre ledit élément de rotation (6) et ledit premier élément cylindrique (4) et/ou ledit deuxième élément cylindrique (5).

2. Dispositif optique (1) selon la revendication 1, comprenant également un élément de base fixe (9) configuré pour accueillir ledit élément de rotation (6) et ledit deuxième élément cylindrique (5).

3. Dispositif optique (1) selon la revendication 1 ou 2, comprenant également au moins un troisième élément cylindrique (10) interposé entre ledit premier élément cylindrique (4) et ledit deuxième élément cylindrique (5), ledit premier élément cylindrique (4) comprenant une surface extérieure filetée (11), ledit deuxième élément cylindrique (5) comprenant une surface intérieure filetée (12), et ledit ou lesdits troisièmes éléments cylindriques (10) comprenant une surface intérieure filetée (12) et une surface extérieure filetée (11), chaque surface intérieure filetée (12) étant configurée pour s'engrener avec une surface extérieure filetée (11).

4. Dispositif optique (1) selon l'une quelconque des revendications précédentes, ledit premier élément cylindrique (4) et ledit ou lesdits troisièmes éléments cylindriques (10) étant entièrement enfermés par ledit deuxième élément cylindrique (5), le long dudit axe optique (A), lorsque ledit dispositif optique (1) est dans ladite position d'extrémité entièrement rétractée (P1), chacun desdits premier élément cylindrique (4) et troisième(s) élément(s) cylindrique(s) (10) étant partiellement décalé le long dudit axe optique (A) par rapport audit deuxième élément cylindrique (5) ou par rapport à un troisième élément cylindrique adjacent (10), lorsque ledit dispositif optique (1) est dans ladite position d'extrémité entièrement déployée (P2).

5. Dispositif optique (1) selon l'une quelconque des revendications 1 à 4, dans lequel ledit bras en forme de spirale (8a) comprend au moins une marche (8b), une marche (7b) étant disposée à un emplacement correspondant à une position dudit premier élément cylindrique (4) le long dudit axe optique (A) lorsque ledit dispositif optique (1) est dans ladite position d'extrémité entièrement déployée (P2), et éventuellement une marche (8b) disposée à un emplacement correspondant à des positions dudit ou desdits troisièmes éléments cylindriques (10) le long dudit axe optique (A) lorsque ledit dispositif optique (1) est dans ladite position d'extrémité entièrement déployée (P2), ladite ou lesdites marches (8b) comprenant une réduction instantanée du diamètre de ladite forme en spirale telle qu'observée dans un plan perpendiculaire audit axe optique (A).

6. Dispositif optique (1) selon l'une quelconque des revendications précédentes, dans lequel ladite seconde extrémité dudit élément d'actionnement (8) comprend un élément annulaire plan (8c) configuré pour se prolonger dans ledit plan perpendiculaire audit axe optique (A) quelle que soit la position dudit dispositif optique (1).

7. Dispositif optique (1) selon l'une quelconque des revendications précédentes, dans lequel ledit élément d'actionnement (8) comprend un matériau conducteur, ladite seconde extrémité dudit élément d'actionnement (8) étant connectée électriquement à un circuit imprimé flexible (13) se prolongeant adjacent à ladite seconde extrémité.

8. Dispositif optique (1) selon l'une quelconque des revendications précédentes, dans lequel ledit dispositif optique comprend également un élément d'arrêt extensible (14), une première extrémité dudit élément d'arrêt (14) étant fixée audit premier élément cylindrique (4) et une seconde extrémité dudit élément d'arrêt (14) est fixée audit élément de base (9), ledit élément d'arrêt (14) étant configuré pour empêcher la rotation dudit premier élément cylindrique (4) autour dudit axe optique (A), lorsque ledit élément de rotation (6) est tourné autour dudit axe optique (A).

9. Dispositif optique (1) selon la revendication 8, dans lequel ledit élément d'arrêt (14) comprend un bras en forme de spirale (14a) se prolongeant entre ledit élément de base (9) et ledit élément d'actionnement (8) dans la direction dudit axe optique (A) .

10. Dispositif optique (1) selon l'une quelconque des revendications précédentes, dans lequel ledit agencement d'entraînement (7) comprend un moteur électromagnétique, un rotor (7a) dudit moteur étant configuré pour entrer en contact avec ledit élément de rotation (6) de sorte que ledit élément de rotation (6) est tourné autour dudit axe optique (A) dans une première direction tangentielle (D1) et dans une seconde direction tangentielle (D2).

11. Appareil électronique (2) comprenant un dispositif optique (1) selon l'une quelconque des revendications 1 à 10, un châssis (17), et un boîtier (9) enfermant au moins partiellement ledit dispositif optique (1) et ledit châssis (17),
ledit boîtier (9) comprenant une ouverture traversante configurée pour accueillir au moins le premier élément cylindrique (4) dudit dispositif optique (1).

12. Procédé de fourniture d'une image agrandie d'un objet, ledit procédé comprenant les étapes consistant à :
- fournir un agencement de lentilles (3) définissant un axe optique (O) et un premier élément cylindrique (4) accueillant ledit agencement de lentilles (3) ;
- fournir un deuxième élément cylindrique (5) configuré pour accueillir ledit premier élément cylindrique (4) dans une configuration d'accouplement ;
- fournir un élément de rotation (6) et un élément d'actionnement extensible (8), une première extrémité dudit élément d'actionnement (8) étant fixée audit premier élément cylindrique (4) et une seconde extrémité dudit élément d'actionnement (8) étant fixée audit élément de rotation (6) ;
- entraîner ledit élément de rotation (6) à tourner autour dudit axe optique (A) dans l'une d'une première direction tangentielle (D1) et d'une seconde direction tangentielle (D2),
dans lequel, lorsque ledit élément de rotation (6) tourne dans ladite première direction tangentielle (D1), ledit premier élément cylindrique (4) et ledit agencement de lentilles (3) sont déplacés, le long dudit axe optique (A), vers une position d'extrémité entièrement déployée (P2) par rapport audit deuxième élément cylindrique (5), et
dans lequel, lorsque ledit élément de rotation (6) tourne dans ladite seconde direction tangentielle (D2), ledit premier élément cylindrique (4) et ledit agencement de lentilles (3) sont déplacés, le long dudit axe optique (A), vers une position d'extrémité entièrement rétractée (P1) par rapport audit deuxième élément cylindrique (5),
ledit premier élément cylindrique (4) et ledit agencement de lentilles (3) étant déplacés le long dudit axe optique (A) en réponse au prolongement ou au pliage dudit élément d'actionnement (8) le long dudit axe optique (A),
dans lequel ledit élément d'actionnement (8) est un élément plan configuré pour se prolonger dans un plan perpendiculaire audit axe optique (A) lorsque ledit dispositif optique (1) est dans la position d'extrémité entièrement rétractée (P1), et dans lequel ledit élément d'actionnement (8) est configuré pour, au moins partiellement, se prolonger dans la direction dudit axe optique (A) lorsque ledit dispositif optique (1) est dans une position d'extrémité entièrement déployée (P2),
dans lequel ledit élément d'actionnement (8) comprend un bras en forme de spirale (8a), ledit bras (8a) se prolongeant dans un espace entre ledit élément de rotation (6) et ledit premier élément cylindrique (4) et/ou ledit deuxième élément cylindrique (5).

13. Procédé selon la revendication 12, comprenant l'étape supplémentaire consistant à fournir au moins un troisième élément cylindrique (10) entre ledit premier élément cylindrique (4) et ledit deuxième élément cylindrique (5) de sorte que ledit premier élément cylindrique (4) soit accueilli dans un troisième élément cylindrique (10), et
chaque troisième élément cylindrique (10) est accueilli dans l'un d'un troisième élément cylindrique adjacent (10) et dudit deuxième élément cylindrique (5),
ledit mouvement dudit premier élément cylindrique (4) et dudit agencement de lentilles (3) le long dudit axe optique (A) générant un mouvement correspondant dudit ou desdits troisièmes éléments cylindriques (10) le long dudit axe optique (A).
